(19) Europäisches Patentamt
European Patent Office
Office européen des brevets

(11) Publication number: 0 031 236 B1

(12) # EUROPEAN PATENT SPECIFICATION

(45) Date of publication of patent specification: 25.01.84

(51) Int. Cl.³: C 10 M 1/36

(21) Application number: 80304538.4

(22) Date of filing: 16.12.80

(54) **Lubricant additives, their method of preparation and lubricants containing them.**

(30) Priority: 20.12.79 GB 7943861

(43) Date of publication of application: 01.07.81 Bulletin 81/26

(45) Publication of the grant of the patent: 25.01.84 Bulletin 84/4

(84) Designated Contracting States: BE DE FR GB IT NL SE

(56) References cited: US - A - 3 272 746

(73) Proprietor: The British Petroleum Company p.l.c.
Britannic House Moor Lane
London EC2Y 9BU (GB)

(72) Inventor: Brown, Peter John Nicholas
BP Research Centre Chertsey Road
Sunbury-on-Thames Middlesex TW16 7LN (GB)
Inventor: Parker, David Andrew
Salt End Hedon
Hull HU12 8DS (GB)
Inventor: Robinson, Richard Andrew
Belgrave House 76 Buckingham Palace Road
London SW1W OSU (GB)

(74) Representative: Eastman, Hugh Leonard et al,
BP INTERNATIONAL LIMITED Patents and
Licensing Division Chertsey Road
Sunbury-on-Thames Middlesex TW16 7LN (GB)

EP 0 031 236 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Lubricant additives, their method of preparation and lubricants containing them

This invention relates to an additive suitable for lubricants and to lubricants containing the additive.

It is known that polyisobutylenes of medium to high molecular weight e.g. weight average molecular weight of above 7000 act as viscosity index improvers. It is also known that polyisobutylenes can be converted into detergent-dispersant additives for lubricants and other products. Thus polyisobutylene succinimides are known but the polyisobutylenes used for the production of succinimides are normally of lower molecular weight, e.g. weight average molecular weight of 1000 to 7000.

It has been suggested that the higher molecular weight polyisobutylenes may also be used to produce polyisobutylene succinimides. For example, US Patent No. 3272 746 suggests that polyisobutylene succinimides, in which the molecular weight of the polyisobutylene is from 10,000 to 100,000 or higher, have viscosity index improving properties as well as detergent-dispersant properties. However, in practice, the preparation of such a multi-functional additive is not a straightforward matter. Polyisobutylene succinimides are formed by a two stage reaction. In the first stage polyisobutylene or chlorinated polyisobutylene is reacted with maleic acid or anhydride and in the second stage the resulting acid or anhydride is reacted with an amine. There is only one reactive group in polyisobutylene at the end of each molecule so, as the molecular weight of the polyisobutylene increases, so the ratio of acid or anhydride groups to isobutylene groups decreases. Further the ease of reaction between the polyisobutylene and the maleic acid or anhydride decreases as the molecular weight of the polyisobutylene increases.

Because of these difficulties it has been concluded that there is little benefit to be gained from converting high molecular weight polyisobutylenes to succinimides. A recent US patent, for example, has commented as follows:—

"When the polymer has only 50 carbon atoms sufficient dispersancy sites may be available through the single terminal double bond. However, when the polymer has over 500 carbon atoms, such as is necessary for it to impart some viscosity improving properties, the single terminal double bond will not be sufficient, and a difficult derivitization means is required in order to obtain adequate dispersancy."

It has now been found that, provided that certain conditions are observed, useful high molecular weight polyisobutylene succinimides can be obtained. Such products have been found to have surprisingly better viscosity/temperature properties than the starting high molecular weight polyisobutylene and also to have useful dispersant properties.

According to the present invention therefore an additive suitable for lubricants comprises a polyisobutylene succinimide wherein the weight average molecular weight of the polyisobutylene is at least 10,000, and wherein the molar ratio of amine to acid or anhydride groups is from 0.35:1 to 0.1:1.

The present invention includes a method of preparing an additive suitable for lubricants comprising reacting a polyisobutylene succinic acid or anhydride, derived from a polyisobutylene having a weight average molecular weight of at least 10,000, with an amine at a molar ratio of amine to acid or anhydride groups in the range 0.35:1 to 0.1:1.

The present invention includes a lubricant or related product containing an effective amount of an additive as defined above.

The term "lubricant" means any product which may need to be improved in terms of viscosity index. Thus it includes the normal automotive and industrial lubricants and also transmission, traction and hydraulic fluids.

The lubricant may be an ester or a hydrocarbon lubricant or a mixture. The term hydrocarbon lubricant includes synthetic hydrocarbons, e.g. those produced by polymerisation of olefins as well as petroleum fractions boiling above 300°C, the latter being preferred. Thus it includes all the normal distillate or bright stock lubricating fractions derived from petroleum.

For effective viscosity index improving properties the polyisobutylene should have an average molecular weight of at least 10,000. In general, the higher the molecular weight the better, the limitation being the practical difficulties of the polymerisation step since increased polymerisation is fávoured by lower temperatures. In practice the weight average molecular weight may be from 10,000 to 200,000 particularly from 25,000 to 200,000 and more particularly from 40,000 to 200,000.

The ratio of weight average molecular weight to number average molecular weight

$$\frac{M_w}{M_n}$$

may be from 1 to 6. Suitable polyisobutylenes are those supplied by BP Chemicals Limited under the Registered Trade Mark "Hyvis" particularly the grades Hyvis 7000/45, 50H and 58H (supplied as solutions in mineral oil).

The reaction between the polyisobutylene or chlorinated polyisobutylene and the maleic acid or

anhydride to form the polyisobutylene succinic acid or anhydride may follow known practice, but with the emphasis on conditions which favour the reaction, since as previously described, reaction becomes more difficult as the molecular weight of the polyisobutylene increases.

The broad reaction conditions may be 150° to 250°C at atmospheric or elevated pressure for 4 to 48 hours depending on the molecular weight of the starting polyisobutylene and the conversion required. The reaction which may be catalytic or non-catalytic, may be carried out in the presence of antioxidants or other stabilisers to reduce formation of undesirable resinous byproduct and minimise thermal degradation of the polyisobutylene. The reaction is carried out using maleic anhydride to polyisobutylene mole ratios in the range 30.0:1.0 to 1.0:1.0 and the reaction is favoured by increasing the maleic anhydride:polyisobutylene mole ratio. Conversion levels for high molecular weight polyisobutylenes may be enhanced by the reaction of chlorinated polyisobutylene with maleic anhydride or by reacting maleic anhydride and polyisobutylene in the presence of chlorine. The polyisobutylene used for the reaction may be dissolved in a suitable solvent, e.g. a mineral oil fraction, particularly a lubricating oil fraction, to give a material of appropriate viscosity for storage, pumping and general handling.

It is theoretically possible to use other unsaturated acids or anhydrides besides maleic acid or anhydride, but little commercial use has been made of other materials.

The polyisobutylene acid or anhydride is then reacted with an amine. It has been found that this reaction proceeds fairly readily even with high molecular weight polyisobutylenes and is not therefore a critical reaction. The polyisobutylene acid or anhydride dissolved in a suitable solvent, e.g. toluene, may be reacted with the amine at temperatures of from 50° to 150°C (e.g. under reflux) for periods of from 1 to 12 hours.

A necessary, preferred feature of the present invention is that the molar ratio of amine to acid or anhydride groups is from 0.35:1 to 0.1:1. It has been found that better viscosity/temperature properties result from the use of molar ratios in this range.

As known in the art, a wide range of amines may theoretically be used, of general formula:

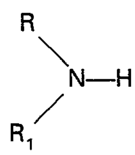

where R and $R_1$ may be hydrogen, hydrocarbon, amino-substituted hydrocarbon, hydroxy-hydrocarbon or oxy-hydrocarbon. To favour the production of succinimides having a molar ratio of amine to acid or anhydride groups in the range 0.35:1 to 0.1:1 the amines should have at least two reactive hydrogen atoms and preferably should be di- or poly-amines. Thus particularly preferred amines are the (poly)alkylene polyamines. Examples of such polyamines are ethylene diamine and the polyethylene polyamines such as diethylene triamine, triethylene tetramine, tetraethylene pentamine and pentaethylene hexamine.

The molar ratios of amine to acid or anhydride groups is to be calculated on the amine used to form the succinimide and the acid or anhydride groups in the polyisobutylene succinic acid or anhydride.

Without being bound by any theory, it is suggested that the use of molar ratios of amine to acid or anhydride groups in the range 0.35:1 to 0.1:1 results in the formation of bis-succinimides or, in the case of polyamines possibly products with 3 or more polyisobutylene succinic acid radicals combined with each amine. Nevertheless, whatever the theory, experimental results have shown that the correct choice of the molar ratio of amine to acid or anhydride groups is essential to obtain the improved viscosity/temperature properties and, that the optimum molar ratio is 0.25:1.

With regard to the acid or anhydride groups, there may, as previously indicated, be incomplete conversion of the polyisobutylene to polyisobutylene succinic anhydride and allowance should be made for this, e.g. by determining the PIBSA Number to indicate the extent of conversion.

The amount of polyisobutylene succinimide added to a lubricant will normally be in the range 1 to 20% wt, (unless used in conjunction with a second Vi improver when less may be used), the better viscosity/temperature properties being used either to reduce the amount of VI improver required for a given quality, or to improve the quality for a given additive level.

The better viscosity/temperature properties are evident in that, as compared with the unmodified polyisobutylene starting material, the products of the present invention produce oil blends having higher high temperature viscosities (100°C to 40°C) with either a lower low temperature (—18°C) viscosity or alternatively without there being a corresponding increase in the low temperature (—18°C) viscosity.

The lubricant may contain other conventional additives, e.g. anti-oxidants, EP and anti-wear agents, dyes, pour point depressants, anti-corrosion agents and other VI improvers. The lubricant may also contain additional detergent/dispersant additives (e.g. a low molecular weight polyisobutylene

succinimide depending on the level of detergency/dispersancy required and the degree of detergency/dispersancy imparted by the product of the present invention.

The invention is illustrated by the following examples.

Examples 1 to 4

*Preparation of polyisobutylene succinic anhydrides (PIBSA)*

Polyisobutylenes of weight average molecular weight 15,000, 27,000 and 51,000 (supplied by BP Chemicals Ltd., under the Trade Mark "Hyvis" as, respectively, Hyvis 2000, Hyvis 7000 and Hyvis 58H) were reacted with maleic anhydride. The polyisobutylenes were dissolved in a lubricating oil having a viscosity of 30 cSt (30 x $10^{-6}$ $m^2/s$) at 38°C and a viscosity index of 100 in an amount to give a solution viscosity of 1,000 cSt ($10^{-3}$ $m^2/s$) at 100°C.

The polyisobutylenes were reacted with excess maleic anhydride in a stirred reaction flask for 24 hours at 215°C to 220°C. At the end of the reaction period, the crude product was dissolved in n-hexane, (approx. 30% based on reactor charge) and filtered through "Super-cel" to remove the insoluble resinous byproduct and most of the excess maleic anhydride. The filtrate was stripped at 80°C/100 mbar ($10^4$ $N/m^2$) to remove hexane and then at 180°C/10 mbar ($10^3$ $N/m^2$) to remove the last traces of maleic anhydride.

Details of the preparations are shown in Table 1 and the analytical data on the reaction products in Table 2.

TABLE 1

Reaction of High Molecular Weight Polyisobutylene with Maleic Anhydride

| Example No. | Polyisobutylene Molecular Weight | Lubricating Oil (Weight % on Polyisobutylene) | Maleic Anhydride Concentration (Weight % on Total Reaction Mixture) | MA : PIB Mole Ratio | Irganox 1010 (1) Weight % on Polyisobutylene |
|---|---|---|---|---|---|
| 1 | 15,000 | 66.6 | 9.2 | 10:1 | – |
| 2 | 27,000 | 122.2 | 4.2 | 10:1 | – |
| 3 | 27,000 | 122.2 | 4.2 | 10:1 | 1.0 |
| 4 | 51,000 | 220 | 3.5 | 20:1 | 1.0 |

(1) Pentaerythrityl – tetrakis – 3 – (3,4-di-tert butyl-4-hydroxyphenyl)-propionate.

Examples 3 and 4 were carried out in the presence of 1.0% wt of Irganox 1010 to minimise thermal degradation of the polymer (IRGANOX is a Registered Trade Mark).

Table 2 shows that the relatively low conversions to PIBSA were obtained despite using MA:Polyisobutylene ratios of up to 20:1.

TABLE 2

| Example No. | Polyiso-butylene Molecular Weight | Composition of Product % m/m | | | | Conversion of Polyiso-butylene % | PIBSA No. of Product mg KOH $g^{-1}$ |
|---|---|---|---|---|---|---|---|
| | | Lube Oil | Unreacted Polyiso-butylenes | Maleic anhydride | PIBSA (by difference) | | |
| 1 | 15,000 | 40 | 31.4 | <0.05 | 28.6 | 47 | 8.3 |
| 2 | 27,000 | 55 | 25.1 | <0.05 | 19.9 | 44 | 4.2 |
| 3 | 27,000 | 55 | 23.3 | <0.05 | 21.7 | 48 | 5.8 |
| 4 | 51,000 | 68.7 | 24.6 | <0.05 | 6.7 | 21 | 3.0 |

Examples 5 and 6

*Preparation of polyisobutylene succinimides*

The anhydride products of Examples 3 and 4 were converted to polyisobutylene succinimides by reaction with tetraethylene pentamine.

Tetraethylene pentamine in toluene (45 ml) was added quickly with stirring to polyisobutylene succinic anhydride in toluene (5 ml). The solution was boiled under reflux for 6 hr, cooled and then stripped in a rotary film evaporator at an elevated temperature (100°C) and a reduced pressure (3 mm Hg i.e. 400 N/$m^2$) to give the polyisobutylene succinimide as a viscous liquid. For quantities see Table 3 below.

TABLE 3

| Example | Polyiso-butylene succinic anhydride g | Tetra-ethylene-pentamine g | Amine/ Anhydride mole ratio | Polyisobutylene succinimide g |
|---|---|---|---|---|
| 5 | 12.7 (Ex. 3) | 0.045 | 1:0.36 | 12.4 |
| 6 | 22.2 (Ex. 4) | 0.019 | 1:0.17 | 21.8 |

Example 7

*Viscosity Test*

The succinimide product of Example 5 was incorporated into a lubricating oil and compared with unmodified polyisobutylene starting material dissolved in lubricating oil as regards viscosity/temperature performance.

The results are shown in Table 4 below.

TABLE 4

| | Polyisobutylene Molecular Weight 27000 | | Polyisobutylene Succinimide | |
|---|---|---|---|---|
| Formulation | | | | |
| Polymer (45% in BG 30/100) % wt | 6.0 | 12.0 | 6.0 | 12.0 |
| BG 30/100 % wt | 94.0 | 88.0 | 94.0 | 88.0 |
| Initial Viscosities | | | | |
| Kinematic viscosity @ 100°C cSt (× $10^{-6}$ $m^2/s$) | 7.98 | 12.46 | 8.75 | 13.95 |
| Kinematic viscosity @ 40°C CSt (× $10^{-6}$ $m^2/s$) | 51.35 | 84.09 | 56.01 | 97.87 |
| 0°F (–18°C) Cold Cranking Simulator viscosity cP (× $10^{-3}$ kg/ms) | 2280 | 3770 | 2280 | 3900 |

Comparing column 1 with column 3 and column 2 with column 4, it will be seen that the oils containing the succinimide products of the present invention had higher viscosities at 40° and 100°C than the oils containing the unmodified polyisobutylene, but that the 0°F (—18°C) cold cranking viscosities were similar.

Example 8

*Viscosity Test*

Example 7 was repeated using the succinimide product of Example 6 and the corresponding unmodified polyisobutylene. The products were dissolved in a blend of lubricating oils to give viscosities corresponding to a 20W/50 type specification.

The results are shown in Table 5 below.

TABLE 5

| | Polyisobutylene Molecular Weight 51,000 | | Polyisobutylene Succinimide | |
|---|---|---|---|---|
| Formulation | | | | |
| Polymer (31.25% in BG 30/100) % wt | 6.0 | 12.0 | 6.0 | 12.0 |
| BG 30/100 | 70.5 | 66.0 | 70.5 | 66.0 |
| BG 95/95 | 23.5 | 22.0 | 23.5 | 22.0 |
| Initial Viscosities | | | | |
| Kinematic viscosity @ 100°C cSt (× $10^{-6}$ $m^2/s$) | 9.94 | 15.08 | 10.56 | 16.39 |
| Kinematic viscosity @ 40°C cSt (× $10^{-6}$ $m^2/s$) | 67.56 | 108.1 | 73.47 | 123.3 |
| 0°F (–18°C) Cold Cranking Simulator Viscosity cP (× $10^{-3}$ kg/ms) | 3430 | 4800 | 3120 | 4420 |

The results are similar to those of Example 7, the oils containing the succinimide product having higher 40°C and 100°C viscosities, and, in this case, lower 0°F (—18°C) viscosities.

Example 8 was repeated using a lubricating oil to give viscosities corresponding to a 15W/50 type specification.

The Results, similar to those of Example 8, are shown in Table 6 below.

TABLE 6

| | Polyisobutylene Molecular Weight 51,000 | | Polyisobutylene Succinimide | |
|---|---|---|---|---|
| Formulation | | | | |
| Polymer (31.25% in BG 30/100) % wt | 8.0 | 14.0 | 8.0 | 14.0 |
| BG 30/100 % wt | 92.0 | 86.0 | 92.0 | 86.0 |
| Initial Viscosities | | | | |
| Kinematic viscosity @ 100°C cSt ($\times 10^{-6}$ $m^2/s$) | 9.86 | 14.88 | 10.55 | 16.79 |
| Kinematic viscosity @ 40°C cSt ($\times 10^{-6}$ $m^2/s$) | 62.45 | 99.66 | 69.40 | 119.0 |
| 0°F (−18 °C) Cold Cranking Simulator Viscosity cP ($\times 10^{-3}$ kg/ms) | 2450 | 3450 | 2230 | 3250 |

Example 10

A series of polyisobutylene succinimides was formed using different molar ratios of amine to anhydride.

The starting polyisobutylene had a weight average molecular weight of 51,000 and was the material supplied by BP Chemicals Limited under the Registered Trade mark "Hyvis".

This polyisobutylene was converted to polyisobutylene succinic anhydride using the technique described in Example 4. The conversion of polyisobutylene was 21% and the PIBSA No. of the product was 3.0 mg KOH $g^{-1}$.

Quantities of this anhydride product were reacted with tetraethylene pentamine at different amine:anhydride molar ratios using the technique described in Example 6. The molar ratios, quantities of reactants and yield of succinimide product are set out in Table 7 below.

TABLE 7

| Mole Ratio Anhydride: Amine | Anhydride Solution | | Amine Solution | | Yield of Succinimide Concentrate/g |
|---|---|---|---|---|---|
| | Weight of Hyvis Succinic Anhydride Concentrate/g | Volume of Toluene/$cm^3$ | Weight of Tetraethylene-pentamine/g | Volume of Toluene/$cm^3$ | |
| 1 : 1.25 | 40.0 | 70 | 0.254 | 10 | 38.9 |
| 1 : 1 | 40.0 | 70 | 0.203 | 10 | 34.9 |
| 1 : 1 | 40.0 | 70 | 0.203 | 10 | 38.7 |
| 1 : 0.8 | 40.0 | 70 | 0.162 | 10 | 40.2 |
| 1 : 0.5 | 40.0 | 70 | 0.102 | 10 | 38.1 |
| 1 : 0.35 | 40.0 | 100 | 0.071 | 10 | 40.1 |
| 1 : 0.25 | 120.0 | 250 | 0.153 | 10 | 120.2 |
| 1 : 0.25 | 100.0 | 200 | 0.128 | 10 | 100.1 |
| 1 : 0.25 | 40.0 | 70 | 0.051 | 10 | 39.8 |
| 1 : 0.20 | 40.0 | 100 | 0.041 | 10 | 40.0 |
| 1 : 0.1 | 40.0 | 70 | 0.020 | 10 | 38.5 |

Each of the succinimides were dissolved in lubricating oil and the viscosities of the oil determined at 100°C, 40°C and −18°C.

The succinimides were used in the form of 31% wt solutions in a mineral oil (viscosity 30 cSt ($3 \times 10^{-5}$ $m^2/s$) at 38°C; viscosity index 100). These solutions were then mixed with further lubricating oil (a 75:25 blend of the above oil and an oil of 95 cSt ($95 \times 10^{-6}$ $m^2/s$) at 38°C and VI 95) to give final oils containing 12%, 9% and 6% wt of polymer.

Using the same 75:25 blend of oils, oils were also prepared containing 12%, 9% and 6% of the starting polyisobutylene and the polyisobutylene succinic anhydride. The viscosities of these oils were also determined at 100°C, 40°C and −18°C.

The results are shown in Figures 1 to 3 accompanying the specification which are graphs plotting viscosity against anhydride:amine mole ratio at the three different temperatures. (1 cSt = $10^{-6}$ $m^2/s$ and 1 cP = $10^{-3}$ kg/ms).

In the graphs the viscosities of the blends containing polyisobutylene or polyisobutylene succinic anhydride are shown as straight dotted lines forming, in effect, base lines. As compared with these base lines, the blends containing the polyisobutylene succinimides had higher viscosities at 100°C and 40°C and lower viscosities at −18°C. The −18°C viscosity was not affected by the anhydride:amine ratio but at 100°C and 40°C the graphs show an increasing viscosity as the ratio drops below 1:0.35 reaching a maximum at 1:0.25.

Example 11

*Dispersancy Test*

The polyisobutylene starting materials, the anhydride products of Examples 3 and 4 and the succinimide products of Examples 5 and 6 were tested for dispersancy using a spot dispersancy test.

In the test, 4 g of additive were dissolved in 96 g of mixed lubricating base oils (70% w/w GB 30/100, 30% w/w 95/95). 2 g of carbon (250 micron M.T. carbon black) were dissolved in the additive-oil solution using an ultrasonic probe of 150 Watts output for 5 minutes. On cooling to room temperature, three drops of test solution were spotted onto the centre of a filter paper (Whatman 41 ashless). The papers were left on a clean level surface for 24 hours at room temperature and then the areas of carbon stain and oil stain were calculated from measurement of the diameters of the stains (average of 2 measurements taken at right angles).

The relative dispersancy was calculated as a percentage staining from:

$$\frac{\text{Area of Carbon Stain}}{\text{Area of Oil Stain and Carbon Stain}} \times 100$$

The results are shown in Table 8 below.

TABLE 8

| Polyisobutylene Molecular Weight | % Carbon Stain of Total Stained Area | | |
|---|---|---|---|
| | Unmodified Polyisobutylene | Polyisobutylene succinic Anhydride | Polyisobutylene Succinimide |
| 27,000 | 20.1 | 25.0 | 61.8 |
| 51,000 | 21.2 | 35.0 | 56.3 |

Table 8 shows that while the unmodified polyisobutylene and the polyisobutylene succinic anhydrides had poor dispersant properties, the polyisobutylene succinimides had significant dispersant properties even when the starting polyisobutylene had a molecular weight as high as 51,000.

**Claims**

1. An additive suitable for lubricants comprising a polyisobutylene succinimide wherein the weight average molecular weight of the polyisobutylene is at least 10,000 and wherein the molar ratio of amine to acid or anhydride groups is from 0.35:1 to 0.1:1.

2. An additive as claimed in claim 1 wherein the weight average molecular weight of the polyisobutylene is from 25,000 to 200,000, preferably from 40,000 to 200,000.

3. An additive as claimed in claim 1 or claim 2 wherein the molar ratio of amine to acid or anhydride groups is 0.25:1.

4. A method of preparing an additive suitable for lubricants comprising reacting a polyisobutylene succinic acid or anhydride, derived from a polyisobutylene having a weight average molecular weight of

at least 10,000, with an amine at a molar ratio of amine to acid or anhydride groups of from 0.35:1 to 0.1:1.

5. A method as claimed in claim 4 wherein the amine is a di- or poly-amine.

6. A method as claimed in claim 5 wherein the amine is ethylene diamine or a polyethylene polyamine.

7. A lubricant containing an effective amount of an additive as claimed in any of claims 1 to 3 or prepared by a method as claimed in any of claims 4 to 6.

8. A lubricant as claimed in claim 7 containing from 1 to 20% wt of the additive.

9. A lubricant as claimed in claim 7 or 8 wherein the lubricant is a distillate or bright stock fraction derived from petroleum.

**Revendications**

1. Additif pour lubrifiants, comprenant un succinimide de polyisobutylène, dans lequel le poids moléculaire moyen en poids du polyisobutylène est d'au moins 10.000, et dans lequel le rapport molaire de l'amine par rapport aux groupes acide ou anhydride est compris entre 0,35:1 et 0,1:1.

2. Additif selon la revendication 1, dans lequel le poids moléculaire moyen en poids du polyisobutylène est compris entre 25.000 et 200.000, de préférence entre 40.000 et 200.000.

3. Additif selon l'une des revendications 1 ou 2, dans lequel le rapport molaire de l'amine par rapport aux groupes acide ou anhydride est de 0,25:1.

4. Procédé de préparation d'un additif pour lubrifiants, consistant à faire réagir un acide ou anhydride succinique de polyisobutylène, dérivé d'un polyisobutylène ayant un poids moléculaire moyen d'au moins 10.000, avec une amine, un rapport molaire de l'amine par rapport aux groupes acide ou anhydride compris entre 0,35:1 et 0,1:1.

5. Procédé selon la revendication 4, dans lequel l'amine est une di-ou poly-amine.

6. Procédé selon la revendication 5, dans lequel l'amine est une diamine d'éthylène ou une polyamine de polyéthylène.

7. Lubrifiant contenant une quantité significative d'un additif selon l'une des revendications 1 à 3, ou préparé par un procédé suivant l'une des revendications 4 à 6.

8. Lubrifiant selon la revendication 7, contenant de 1 à 20% en poids de l'additif.

9. Lubrifiant selon l'une des revendications 7 ou 8, dans lequel le lubrifiant est un distillat ou une fraction d'un résidu dérivé de pétrole.

**Patentansprüche**

1. Additive, das für Schmiermittel geeignet ist, enthaltend ein Polyisobutylen-succinimid, wobei das Gewichtsmittel des Molekulargewichts des Polyisobutylens mindestens 10 000 beträgt und das Stoffmengenverhältnis ("Molverhältnis") der Amin-Gruppen zu den Säure- oder Anhydrid-Gruppen von 0,35:1 bis 0,1:1 begrägt.

2. Additiv nach Anspruch 1, worin das Gewichtsmittel des Molekulargewichts des Polyisobutylens 25 000 bis 200 000, vorzugsweise 40 000 bis 200 000, beträgt.

3. Additiv nach Anspruch 1 oder Anspruch 2, worin das Stoffmengenverhältnis der Amin-Gruppen zu den Säure- oder Anhydrid-Gruppen 0,25:1 beträgt.

4. Verfahren zur Herstellung eines für Schmiermittel geeigneten Additivs, wobei eine Polyisobutylenbernsteinsäure oder deren Anhydrid, die sich von einem Polyisobutylen mit einem Gewichtsmittel des Molekulargewichts von mindestens 10 000 ableiten, mit einem Amin in einem Stoffmengenverhältnis der Amin-Gruppen zu den Säure- oder Anhydrid-Gruppen von 0,35:1 bis 0,1:1 zur Reaktion gebracht wird.

5. Verfahren nach Anspruch 4, dadurch gekennzeichnet, daß das Amin ein Di- oder Polyamin ist.

6. Verfahren nach Anspruch 5, dadurch gekennzeichnet, daß das Amin Ethylendiamin oder ein Polyethylenpolyamin ist.

7. Schmiermittel, enthaltend eine wirksame Menge eines Additivs nach Anspruch 1 bis 3 oder hergestellt mittels eines Verfahrens nach Anspruch 4 bis 6.

8. Schmiermittel nach Anspruch 7, enthaltend von 1 bis 20 Gew.-% des Additivs.

9. Schmiermittel nach Anspruch 7 oder Anspruch 8, dadurch gekennzeichnet, daß das Schmiermittel ein Destillat oder eine Brightstock-Fraktion aus Erdöl ist.

FIG.1

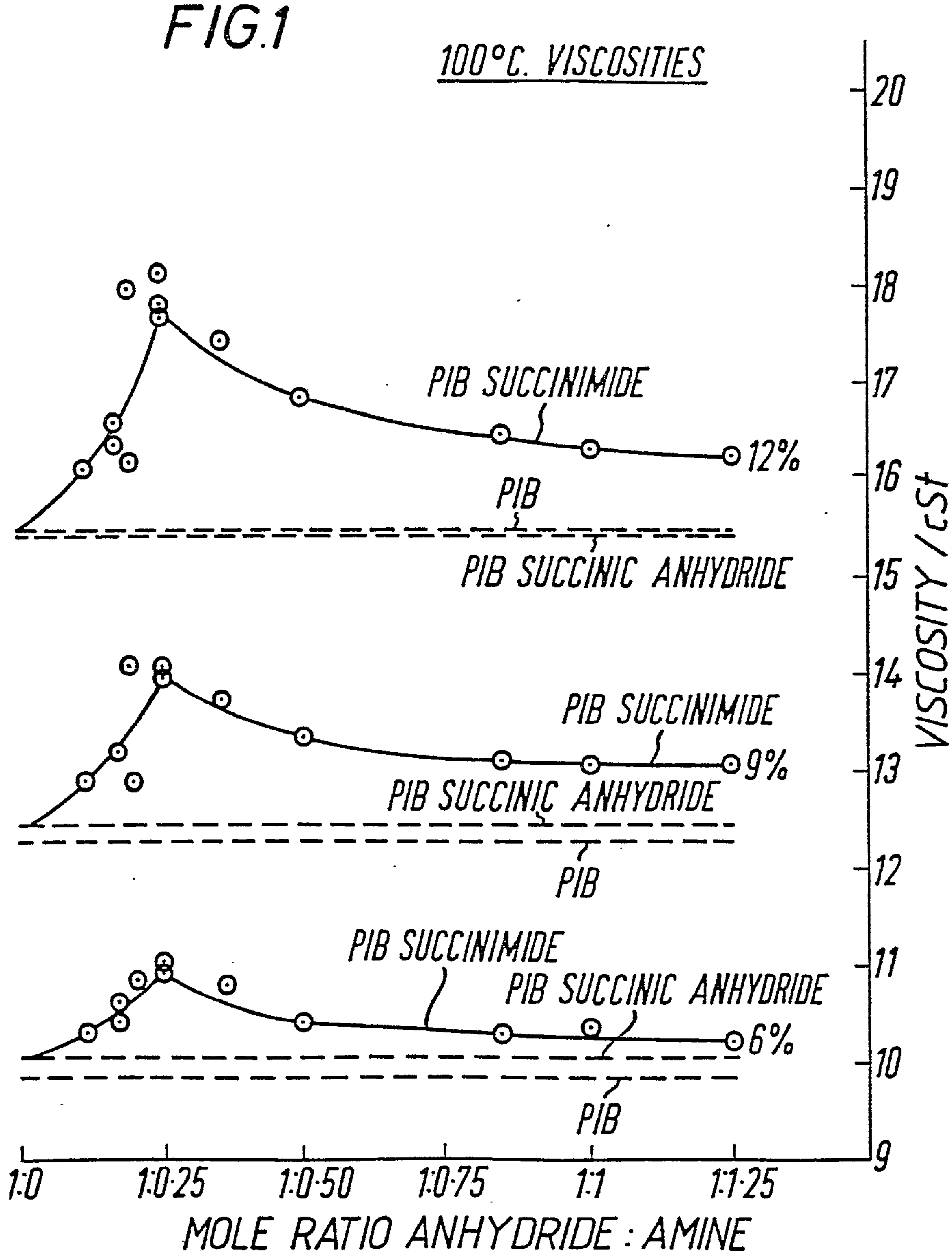
100°C. VISCOSITIES
PIB SUCCINIMIDE
12%
PIB
PIB SUCCINIC ANHYDRIDE
PIB SUCCINIMIDE
9%
PIB SUCCINIC ANHYDRIDE
PIB
PIB SUCCINIMIDE
PIB SUCCINIC ANHYDRIDE
6%
PIB
20
19
18
17
16
15
14
13
12
11
10
9
VISCOSITY /cSt
1:0
1:0·25
1:0·50
1:0·75
1:1
1:1·25
MOLE RATIO ANHYDRIDE : AMINE

FIG.2

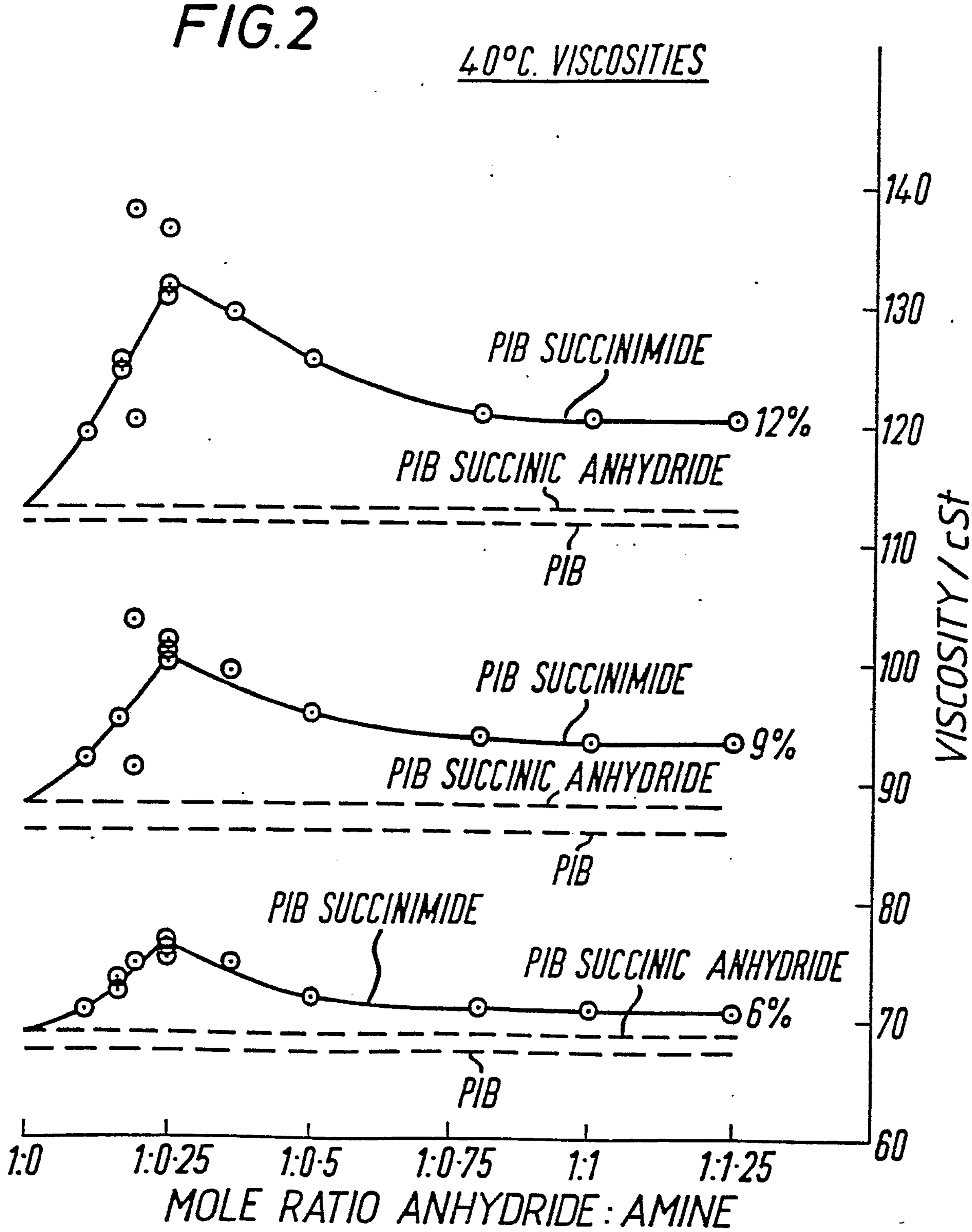
40°C. VISCOSITIES
PIB SUCCINIMIDE
12%
PIB SUCCINIC ANHYDRIDE
PIB
PIB SUCCINIMIDE
9%
PIB SUCCINIC ANHYDRIDE
PIB
PIB SUCCINIMIDE
PIB SUCCINIC ANHYDRIDE
6%
PIB
140
130
120
110
100
90
80
70
60
VISCOSITY / cSt
1:0
1:0·25
1:0·5
1:0·75
1:1
1:1·25
MOLE RATIO ANHYDRIDE : AMINE

FIG.3

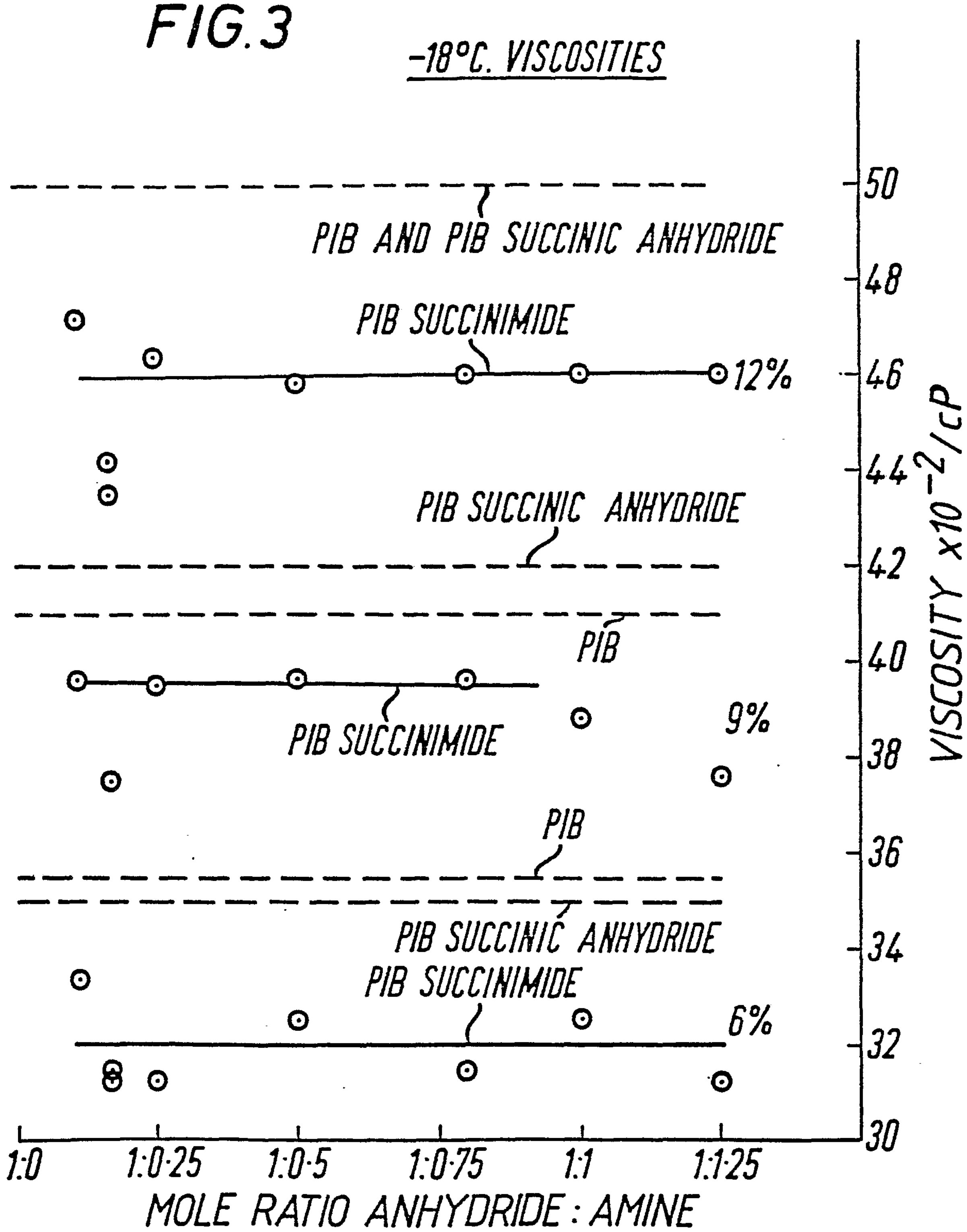
-18°C. VISCOSITIES
PIB AND PIB SUCCINIC ANHYDRIDE
PIB SUCCINIMIDE
12%
PIB SUCCINIC ANHYDRIDE
PIB
PIB SUCCINIMIDE
9%
PIB
PIB SUCCINIC ANHYDRIDE
PIB SUCCINIMIDE
6%
50
48
46
44
42
40
38
36
34
32
30
VISCOSITY x10$^{-2}$/cP
1:0
1:0·25
1:0·5
1:0·75
1:1
1:1·25
MOLE RATIO ANHYDRIDE : AMINE